# EUROPÄISCHE PATENTSCHRIFT

(11) **EP 0 462 523 B1**
(45) Veröffentlichungstag und Bekanntmachung des Hinweises auf die Patenterteilung: **31.08.1994**
(21) Anmeldenummer: 91109794.7
(22) Anmeldetag: 14.06.1991
(51) Int. Cl.: B01J 47/08, C02F 1/46, C02F 1/42

(54) **Vorrichtung und Verfahren zum Aufbereiten von Wasser**
Apparatus and process for water treatment
Appareil et procédé pour le traitement de l'eau

(30) Priorität: 20.06.1990 DE 4019580
(43) Veröffentlichungstag der Anmeldung: 27.12.1991
(73) Patentinhaber: Zimmermann, Heinz, D-47877 Willich (DE); Manteuffel, Hans J.M., D-40764 Langenfeld (DE)
(72) Erfinder: Zimmermann, Heinz, D-47877 Willich (DE); Manteuffel, Hans J.M., D-40764 Langenfeld (DE)
(74) Vertreter: COHAUSZ HASE DAWIDOWICZ & PARTNER

(56) Entgegenhaltungen:
- DE-C- 3 441 419
- GB-A- 809 685

## Beschreibung

Die Erfindung betrifft eine Vorrichtung zum Entfernen von Kationen/Anionen aus Flüssigkeiten mit einem die Flüssigkeit enthaltenen Behälter, in dem eine Schicht von Ionenaustauschermaterial als auch eine Kathode und eine Anode angeordnet sind, an denen Spannung anliegt und zwischen der Anode (4) und der Kathode (9) die Schicht von Ionenaustauschmaterial (6) angeordnet ist.

Es sind Verfahren und Vorrichtungen bekannt, bei denen Flüssigkeiten einem Spannungsfeld ausgesetzt werden, wodurch die in der Flüssigkeit sich befindenden Ionen, Kationen oder Anionen voneinander getrennt werden und/oder in feinster Verteilung als fester Niederschlag ausfallen. Oft wird die Flüssigkeit zusätzlich zu dem elektrolytischen Vorgang zur Vergrößerung des zeitlichen Durchsatzes an gereinigter Flüssigkeit durch einen Ionenaustauscher geleitet. Auch dabei fallen feste Materialien aus. Die Vergrößerung des gereinigten Volumens ermöglicht die kontinuierliche Durchführung des Ionenaustauschprozesses, ohne daß der Flüssigkeitsstrom unterbrochen werden muß.

Eine diese Kombination des elektrolytischen und chemischen Verfahrensprinzips nutzende Vorrichtung wird in der deutschen Patentanmeldung P3341242 beschrieben, bei der auf elektrochemischem Wege Sauerstoff aus einer wässrigen Lösung entfernt wird. In dieser Anmeldung wird der Flüssigkeitsstrom durch einen durchlässigen, sich räumlich erstreckenden Ionenaustauscher geführt. Gleichzeitig wird der Flüssigkeitsstrom einem sich von konzentrisch angebrachten Elektroden radial ausbreitenden und koaxial zum Flüssigkeitsstrom erstreckenden Spannungsfeld ausgesetzt. Der bei dem Ionenaustauschprozeß entstehende Sauerstoff wird über Leitungen abgeführt.

Aus anderen Schriften, z.B. aus der deutschen Patentanmeldung P3805813, ist es bekannt, daß das sich beladene Ionenaustauschmaterial auf elektrolytische, chemische oder elektrochemische Weise wieder aufbereitet werden kann, ohne daß es aus der apparativen Vorrichtung entnommen werden muß. Dabei wird das Ionenaustauschmaterial beispielsweise einem pulsierenden Wechselspannungsfeld oder ionisierenden Chemikalien ausgesetzt.

Allen diesen Verfahren und Vorrichtungen gemeinsam ist, daß das ausfallende feste Material im Flüssigkeitsstrom verbleibt. Dadurch kann nicht ausgeschlossen werden, daß dieses Material in einem späteren, auch unbeabsichtigten, chemischen oder elektrochemischen Prozeß wieder in den Ausgangszustand verfällt und seine schädliche oder unerwünschte Wirkung zeigt.

Ferner ist es bei den bekannten Vorrichtungen nicht möglich, Kationen und Anionen mit demselben Ionenaustauschermaterial zu reduzieren.

Aufgabe der Erfindung ist es, eine Vorrichtung/ein Verfahren der eingangs genannten Art so zu verbessern, daß bei einfacher Konstruktion und kleiner Bauweise ein hoher Wirkungsgrad und eine hohe Funktionssicherheit bei geringem Energiebedarf erreicht werden.

Diese Aufgabe wird erfindungsgemäß dadurch gelöst, daß zwischen der Schicht von Ionenaustauschmaterial und der Kathode ein freier flüssigkeitsgefüllter Raum als Behandlungsraum und zwischen der Kathode und der Wand des Behälters ein flüssigkeitsgefüllter Außenraum besteht, wobei der Behandlungsraum und der Außenraum zumindest an beiden Enden miteinander verbunden sind um einen Flüssigkeitskreislauf zuzulassen.

Eine solche Vorrichtung weist einen einfachen Aufbau auf und besitzt einen hohen Wirkungsgrad. Bei geringem Energiebedarf sind sowohl Kationen als auch Anionen mit demselben Ionenaustauschermaterial entfernbar. Das Ionenaustauschermaterial setzt sich nicht zu und es sind sowohl anorganische als auch organische Verbindungen insbesondere Salze aus dem Rohwasser abtrennbar.

Es wird eine Diffusionsverteilung des pH-Wertes und der Ionen aufgrund der Zirkulation erreicht und damit eine Vergleichmäßigung der Konzentration geschaffen. Eine Mischung der aus dem Innen- und Außenraum entnommenen Flüssigkeiten und/oder eine Mischung derselben einzeln oder gemeinsam mit Rohwasser führt zu einer pH-Wert-Stabilisierung des aufbereiteten Wassers. Die Regeneration des Ionenaustauschermaterials insbesondere eines Harzes hängt hierbei von der Konzentration der produzierten Wasserstoffionen ab. Wird der Gesamtdruck des Systems erhöht, so erhöht sich auch der Partialdruck der zur Regeneration benötigten Ionen. Dies geschieht insbesondere durch ein Absperren des Gerätes.

Während es im Stand der Technik erforderlich ist, zur Kationenabtrennung ein bestimmtes Ionenaustauschermaterial zu verwenden, mit dem Anionen nicht adsorbierbar sind, können bei der erfindungsgemäßen Vorrichtung durch das Ionenaustauschermaterial sowohl Anionen als auch Kationen reduziert werden. Im Gegensatz zur Umkehrosmose können bei der erfindungsgemäßen Vorrichtung mit vermindertem Energieeinsatz und niedriger Druckstufe im Rohwasser enthaltene anorganische und organische Verbindungen abgetrennt werden.

Besonders vorteilhaft ist es, wenn der Außenraum und/oder der Behandlungsraum unten in einen Absetzraum münden.

Damit wird sichergestellt, daß das aus der Vorrichtung austretende behandelte Wasser ausgeflocktes Material nicht enthält. Ein hoher Wirkungsgrad wird auch dadurch erreicht, daß die insbesondere längliche Anode mittig axial angeordnet ist und die Schicht von Ionenaustauschermaterial, der Behandlungsraum, die Kathode, und der Außenraum schalenförmig um die Anode herum angeordnet sind.

Besonders vorteilhaft ist es, wenn die Anode insbesondere in Spiralform auf der Außenseite eines gelochten oder geschlitzten Innenrohres angeordnet ist. Ferner wird hierzu auch vorgeschlagen, daß die Schicht von Ionenaustauschmaterial auf einer oder beiden Seiten von einem Gitter, Gewebe oder Netz begrenzt ist. Die Wirkungsweise der Vorrichtung wird auch dadurch verbessert, wenn der Behandlungsraum und der Außenraum durch eine Trennwand, insbesondere ein Rohr, getrennt ist, auf deren Innenseite die Kathode angeordnet ist. Hierbei kann die Wand bzw. das Rohr gelocht oder geschlitzt sein.

Vorzugsweise wird vorgeschlagen, daß das innere Rohr, die Schicht von Ionenaustauschmaterial, die Trennwand und/oder die Behälterwand als auch die ringförmigen Zwischenräume zueinander koaxial sind. Eine optimale Strömung innerhalb des Gerätes wird erreicht, wenn die (Längs-) Achsen der Wände, Schichten und/oder Rohre senkrecht sind.

Um eine Wasserentnahme oben und unten im Gerät gleichzeitig zu erreichen, so daß Wasser mit unterschiedlichem pH-Wert gemischt entnehmbar ist, wird vorgeschlagen, daß eine Wasserentnahmeleitung vorgesehen wird, die im unteren und im oberen Außenraum mindestens je eine Einlaßöffnung aufweist.

Von größtem Vorteil ist es, wenn die Ein- und Auslaßleitungen des Behälters an einem Mehrwegeventil angeschlossen sind. Dadurch kann auf einfache Weise insbesondere durch das Verstellen nur eines einzigen Ventilstellgliedes das Gerät in allen seinen Funktionsmöglichkeiten gesteuert werden.

Eine kontinuierliche Behandlung des Rohwassers bei hohem Durchsatz wird dann erreicht, wenn die Vorrichtung eine Doppel- oder Mehfachanlage ist, die im Wechsel arbeitet.

Ein Verfahren zum Entfernen von Kationen/Anionen aus Flüssigkeiten unter Verwendung der erfindungsgemäßen Vorrichtung zeichnet sich dadurch aus, daß die Zu- und Ableitungen in der Weise geschaltet werden, daß die Wasser-Behandlungszeit durch Zeitspannen unterbrochen wird, während derer das Ionenaustauschmaterial regeneriert und der Absetzraum entschlammt wird. Hierdurch wird eine optimale Arbeitsweise erreicht. Hierzu wird auch vorgeschlagen, daß während der Wasser-Behandlungszeit zeitweilig Rohwasser zum Teil oder vollständig in den Außenraum und/oder in den Behandlungsraum fließt. Bei dieser Arbeitsweise ist der Wirkungsgrad geringer, so daß sichergestellt werden kann, daß das behandelte Wasser nicht zu stark behandelt werden kann und der gewünschte pH-Wert erreicht wird.

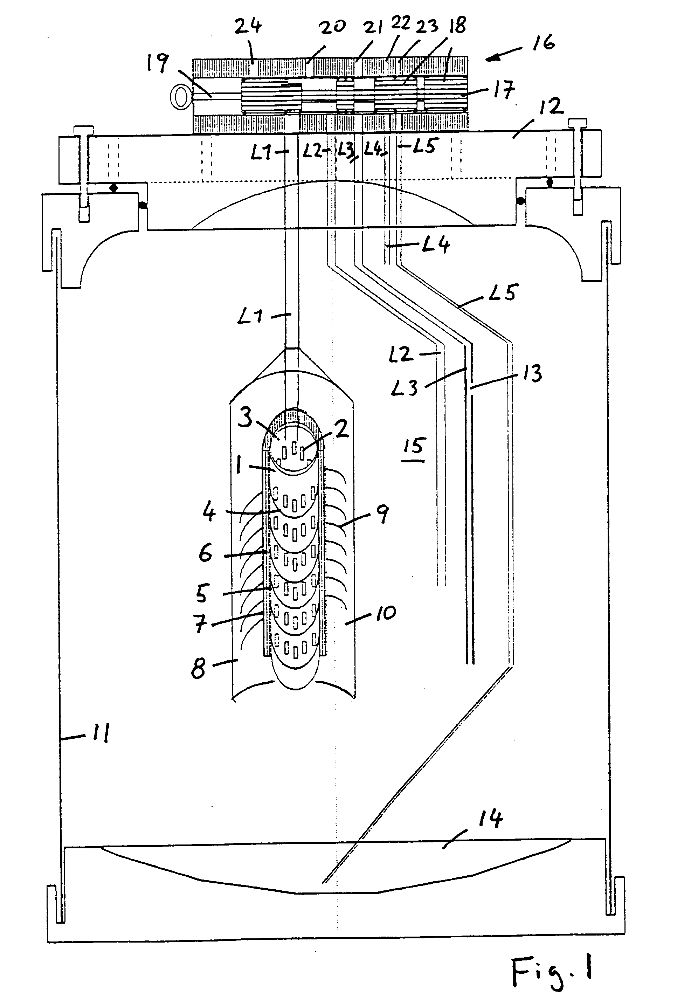

Ein Ausführungsbeispiel der Erfindung ist in den Zeichnungen dargestellt und wird im folgenden näher beschrieben. Es zeigen
- Figur 1: einen senkrechten Schnitt durch die Vorrichtung mit oben aufgesetztem Mehrwegeventil und innen angeordnetem Behandlungsraum, wobei die Teile des Behandlungsraumes isometrisch dargestellt sind,
- Figur 2: einen Schnitt durch das Mehrwegeventil in der Betriebsposition,
- Figur 3: das Mehrwegeventil in der Mischposition,
- Figur 4: das Mehrwegeventil in der geringen Behandlungsposition,
- Figur 5: das Mehrwegeventil in der Regenerationsposition,
- Figur 6: das Mehrwegeventil in der Spülposition und
- Figur 7: das Mehrwegeventil in der Entschlammungsposition.

Die Vorrichtung weist ein senkrechtes Rohr 1 auf, das Öffnungen 2, insbesondere in Form von Schlitzen besitzt und einen Anodenraum 3 umschließt. Das Rohr 1 bildet eine Stütze für eine außenanliegende schraubenförmige Anode 4. Über der Anode liegt ein Gewebe 5, insbesondere ein Filterstrumpf, der dafür sorgt, daß das darüberliegende und um in einer Schicht angeordnete Ionenaustauschermaterial 6 nicht durch die Öffnungen 2 in den Anodenraum 3 gelangt. Das Ionenaustauschermaterial ist ein Harz, insbesondere in Form von Kügelchen und außen von einem Stahlgitter 7 umgeben.

In einem Abstand vom Gitter 7 ist koaxial ein Rohr 8 aus Kunststoff angeordnet, an dessen Innenseite eine Kathode 9 spiralförmig liegt. Damit befindet sich zwischen dem Rohr 8 als auch der Kathode 9 und der Schicht aus Ionenaustauschermaterial ein im Querschnitt ringförmiger Behandlungsraum 10, der nach oben und unten offen ist.

Die Teile 1 bis 10 befinden sich etwa in der Mitte eines zylindrischen Behälters 11, so daß das Rohr 8 rundum in einem etwa gleichgroßen Abstand zur Wand des Behälters 11 steht.

Während der Behandlungsdauer fließt über die Leitung L1 die im Innern des Anodenraums 3 mündet, Rohwasser in den Anodenraum und läßt Calzium im Austausch gegen Wasserstoffionen im Harz des Ionenaustauschermaterials 6 zurück.

Im Regenerationsmodus wandern Wasserstoffionen von der Anode zur Kathode und verdrängen im Harz die Kalziumionen, die zur Kathode wandern und durch den hohen pH-Wert ausgeflockt werden.

Von der Oberseite des Behälters 11 ragen durch den oberen Behälterdeckel 12 neben der Wassereinlaßleitung L1 eine zweite Wassereinlaßleitung L2 nach unten in den Behälter, die etwa im mittleren Bereich des Behälters außerhalb des Rohres 8 mündet. Ferner ragt eine Wasserauslaßleitung L3 nach unten, die im unteren Bereich mündet und im oberen Bereich mindestens eine weitere Einlaßöffnung 13 besitzt. Im oberen Bereich mündet eine Entlüftungsleitung L4 und schließlich mündet im untersten Bereich, d.h. im Absetzraum 14 eine Entschlammungsleitung L5. Die Leitungen L2 bis L5 laufen somit durch den Außenraum (Vorratsraum) 15, der sich rundum um das Rohr 8 befindet.

Alle Leitungen L1 bis L5 laufen durch den Deckel 12 und sind an einem Mehrwegeventil 16 angeschlossen, das an der Oberseite des Deckels 12 befestigt ist. An der Oberseite ist das Mehrwegeventil 16 an einen Rohwassereinlauf 20, ein Wasserauslauf 21, eine Entlüftungsleitung 22, eine Entschlammungsleitung 23 und eine Entlüftung 24 für den Anodenraum angeschlossen. Das Mehrwegeventil 16 besitzt ein Ventilstellglied 17 mit mehreren einzelnen Kolben 18 auf einer Ventilstange 19. Durch Verstellen der Ventilstange 19 in mehreren Stellungen können die nachstehenden Positionen und damit Arbeitsweisen der Vorrichtung erzielt werden.Das Verstellen des Ventilstellgliedes 17 und damit der Kolbenstange 19 geschieht vorzugsweise durch eine elektrische Verstellvorrichtung, die durch eine elektronische Vorrichtung geregelt/gesteuert sein kann:

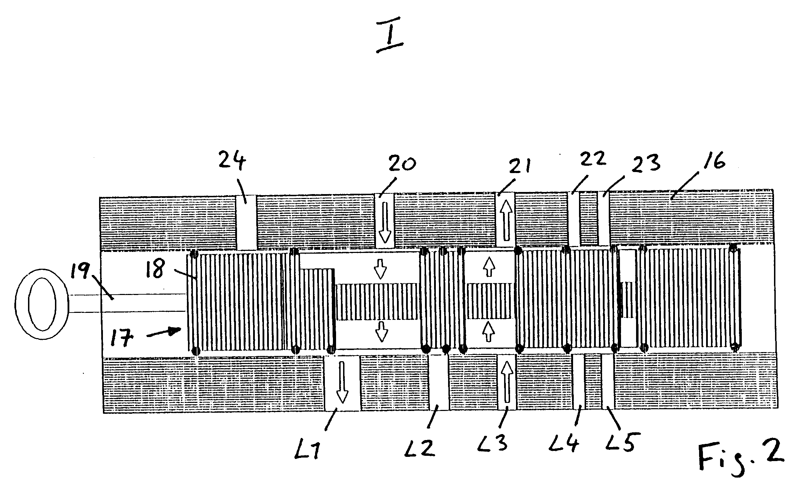

### I Betriebsposition (Fig. 2)

In der in Figur 2 dargestellten Betriebsposition sind die Leitungen L2, L4 und L5 geschlossen und durch die Leitung L1 wird Rohwasser in den Anodenraum geführt und über die Leitung L3 das behandelte Wasser abgelassen.

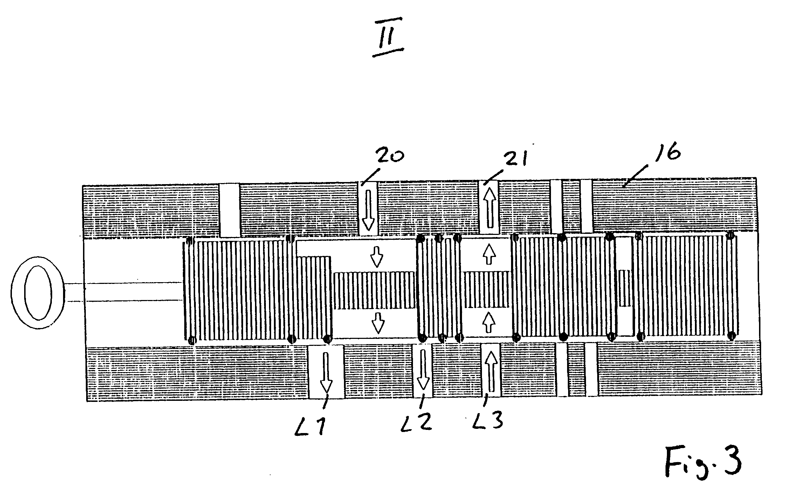

### II Mischposition (Fig. 3)

In dieser Stellung sind die Leitungen L4 und L5 geschlossen und Rohwasser wird sowohl durch die Leitung L1 als auch durch die Leitung L2 eingelassen, so daß ein Teil des Rohwassers in den Anodenraum und ein Teil in den Außenraum gelangt. Dadurch entsteht ein geringerer Behandlungseffekt, so daß sichergestellt wird, daß das austretende Wasser nicht zu stark behandelt ist.

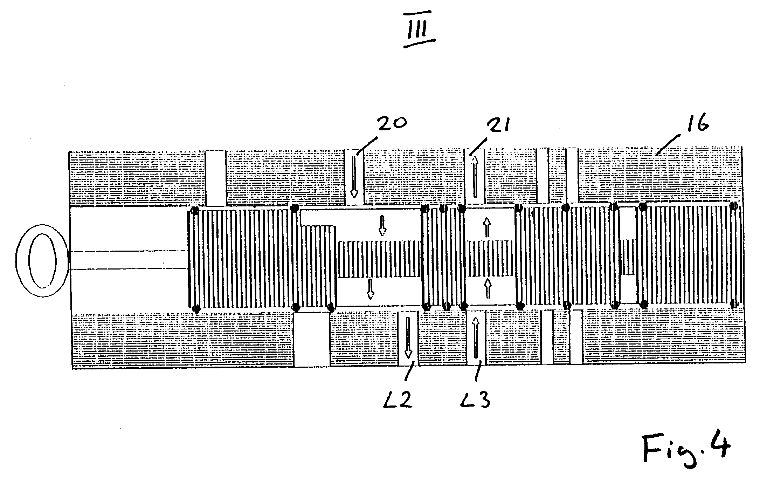

### III Position geringster Behandlung (Fig. 4)

In dieser Stellung sind die Leitungen L1, L4 und L5 geschlossen und das Rohwasser tritt nur durch die Leitung L2 ein und gelangt damit nur in den Außenraum 15, so daß die geringstmögliche Behandlung erzielt wird. Das behandelte Wasser tritt wiederum durch die Leitung L3 aus. Um den Grad der Behandlung zu vergleichmäßigen, kann die Vorrichtung durch eine Steuer- oder Regeleinrichtung zwischen den Positionen I bis III hin und her wechseln.

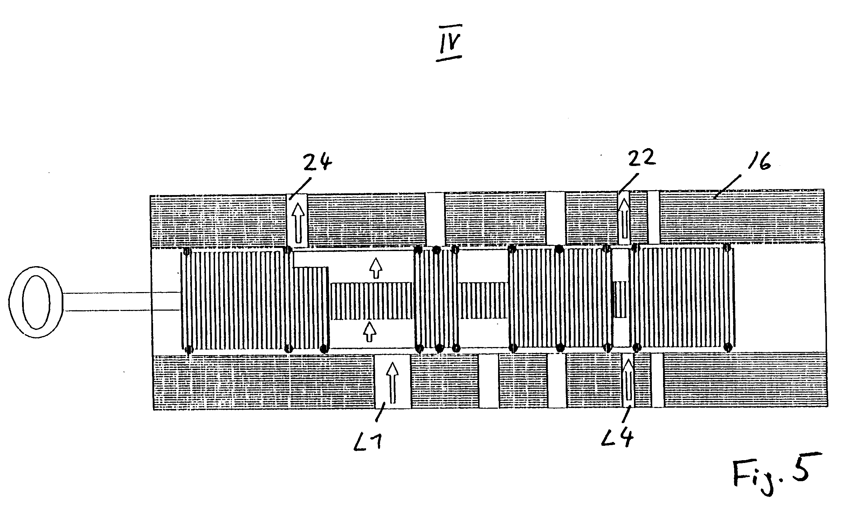

### IV Regeneration (Fig. 5)

Die Leitungen L2, L3 und L5 sind geschlossen und eine gleichgerichtete Spannung liegt zwischen Anode und Kathode an. Durch Ionenwanderung verdrängen die Wasserstoffionen die auf dem Ionentauschermaterial 6 adsorbierten anderen Kathionen (z.B. Calzium) und im Außen- 10 und Behandlungsraum 15 steigen die Konzentrationen der Kathionen und Hydroxyionen, so daß es zu einer gleichzeitigen Regeneration des Ionentauschermaterials und zu einer Austrocknung von Hydroxiden und Carbonaten im Außen- und Behandlungsraum und zum Absinken derselben in den Absetzraum 14 kommt.

Im Anodenraum 3 konzentrieren sich die Anionen, z.B. Chlorid, Nitrat usw.

Während der Regenerationszeit wird eine kontinuierliche Wasserentnahme durch eine parallelgeschaltete Vorrichtung gewährleistet.

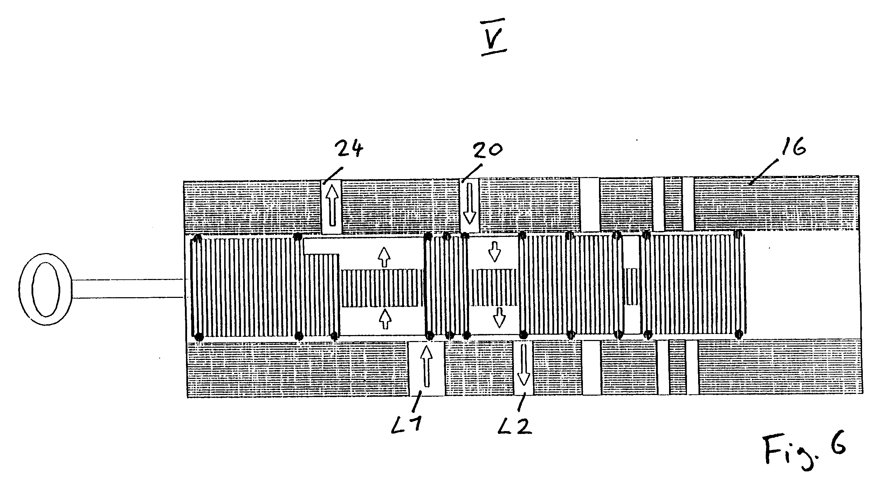

### V Spülen (Fig. 6)

Die Leitungen L3, L4 und L5 sind geschlossen und über die Leitung L2 tritt Rohwasser ein und über die Leitung L1 wird das Wasser aus dem Anodenraum 3 verdrängt, wodurch die unerwünschten Anionen ausgespült werden. Dieser Zustand dauert nur Sekunden.

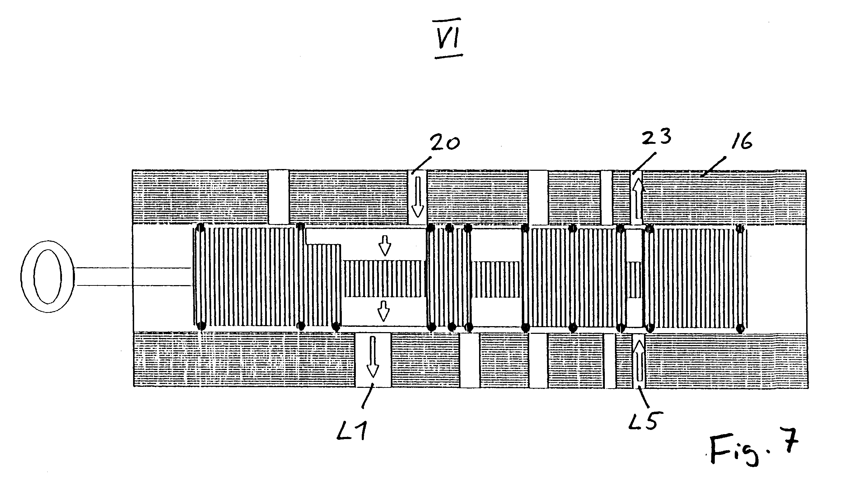

### VI Entschlammung (Fig. 7)

Die Leitungen L2, L3 und L4 sind geschlossen und durch die Leitung L1 wird Rohwasser eingedrückt und durch die Leitung L5 Schlamm herausgedrückt. Auch dieser Zustand dauert nur Sekunden.

## Patentansprüche

1. Vorrichtung zum Entfernen von Kationen/Anionen aus Flüssigkeiten mit einem die Flüssigkeit enthaltenen Behälter (11), in dem eine Schicht von Ionenaustauschermaterial (6) als auch eine Kathode (9) und eine Anode (4) angeordnet sind, an denen Spannung anliegt und zwischen der Anode (4) und der Kathode (9) die Schicht von Ionenaustauschmaterial (6) angeordnet ist, **dadurch gekennzeichnet,** daß zwischen der Schicht von Ionenaustauschmaterial (6) und der Kathode (9) ein freier flüssigkeitsgefüllter Raum als Behandlungsraum (10) und zwischen der Kathode (9) und der Wand des Behälters (11) ein flüssigkeitsgefüllter Außenraum (15) besteht, wobei der Behandlungsraum (10) und der Außenraum (15) zumindest an beiden Enden miteinander verbunden sind um einen Flüssigkeitskreislauf zuzulassen.

2. Vorrichtung nach Anspruch, **dadurch gekennzeichnet,** daß der Außenraum (15) und/oder der Behandlungsraum (10) unten in einen Absetzraum (14) münden.

3. Vorrichtung nach Anspruch 1 oder 2, **dadurch gekennzeichnet,** daß die insbesondere längliche Anode (4) mittig axial angeordnet ist und die Schicht von Ionenaustauschermaterial (6), der Behandlungsraum (10), die Kathode (9), und der Außenraum (15) schalenförmig um die Anode (4) herum angeordnet sind.

4. Vorrichtung nach einem der vorigen Ansprüche, **dadurch gekennzeichnet,** daß die Anode (4) insbesondere in Spiralform auf der Außenseite eines gelochten oder geschlitzten Innenrohres (1) angeordnet ist.

5. Vorrichtung nach einem der vorigen Ansprüche, **dadurch gekennzeichnet,** daß die Schicht von Ionenaustauschmaterial (6) auf einer oder beiden Seiten von einem Gitter, Gewebe oder Netz (5,7) begrenzt ist.

6. Vorrichtung nach einem der vorigen Ansprüche, **dadurch gekennzeichnet,** daß der Behandlungsraum (10) und der Außenraum (15) durch eine Trennwand, insbesondere ein Rohr (8), getrennt ist, auf deren Innenseite die Kathode (9) angeordnet ist.

7. Vorrichtung nach Anspruch 6, **dadurch gekennzeichnet,** daß die Wand bzw. das Rohr (8) gelocht oder geschlitzt ist.

8. Vorrichtung nach einem der vorigen Ansprüche, **dadurch gekennzeichnet,** daß das innere Rohr (1), die Schicht von Ionenaustauschmaterial (6), die Trennwand (8) und/oder die Behälterwand als auch die ringförmigen Zwischenräume (10,15) zueinander koaxial sind.

9. Vorrichtung nach einem der vorigen Ansprüche, **dadurch gekennzeichnet,** daß die (Längs-) Achsen der Wände, Schichten und/oder Rohre senkrecht sind.

10. Vorrichtung nach einem der vorigen Ansprüche, **dadurch gekennzeichnet,** daß eine Wassereinlaßleitung (L1) vorgesehen ist, die im Anodenraum (3) mündet.

11. Vorrichtung nach einem der vorigen Ansprüche, **dadurch gekennzeichnet,** daß eine Wassereinlaßleitung (L2) vorgesehen ist, die im Außenraum (15) und/oder im Behandlungsraum (10) mündet.

12. Vorrichtung nach einem der vorigen Ansprüche, **dadurch gekennzeichnet,** daß eine Wasserentnahmeleitung (L3) vorgesehen ist, die im unteren und im oberen Außenraum (15) mindestens je eine Einlaßöffnung (13) aufweist.

13. Vorrichtung nach einem der vorigen Ansprüche, **dadurch gekennzeichnet,** daß die Ein- und Auslaßleitungen (L1-L5) des Behälters (11) an einem Mehrwegeventil (16) angeschlossen sind.

14. Vorrichtung nach einem der vorigen Ansprüche, **dadurch gekennzeichnet,** daß sie eine Doppel- oder Mehrfachanlage ist, die im Wechsel arbeitet.

15. Vorrichtung nach einem der vorigen Ansprüche, **dadurch gekennzeichnet,** daß über die spiralförmigen Elektroden ein magnetisches Gleich- oder Wechselfeld ausgelegt wird.

16. Verfahren zum Entfernen von Kationen/Anionen aus Flüssigkeiten unter Verwendung einer Vorrichtung nach einem der vorigen Ansprüche, **dadurch gekennzeichnet,** daß die Zu- und Ableitungen (L1-L5) in der Weise geschaltet werden, daß die Wasser-Behandlungszeit durch Zeitspannen unterbrochen wird, während derer das Ionenaustauschmaterial (6) regeneriert und der Absetzraum (14) entschlammt wird.

17. Verfahren nach Anspruch 16, **dadurch gekennzeichnet,** daß während der Wasser-Behandlungszeit zeitweilig Rohwasser zum Teil oder vollständig in den Außenraum (15) und/oder in den Behandlungsraum (10) fließt.

## Claims

1. An apparatus for removing cations/anions from liquids, having a tank (11) which contains the liquid, a layer of ion exchange material (6) and also a cathode (9) and an anode (4), to which voltage is applied, the layer of ion exchange material (6) being disposed between the anode (4) and the cathode (9), characterized in that a free liquid-filled space is provided as a treatment space (10) between the layer of ion exchange material (6) and the cathode (9), and a liquid-filled outer space (15) is provided between the cathode (9) and the wall of the tank (11), the treatment space (10) and the outer space (15) being connected to one another at least at both ends in order to permit a liquid cycle.

2. An apparatus according to claim 1, characterized in that the outer space (15) and/or the treatment space (10) discharge at the bottom into a settling space.

3. An apparatus according to claims 1 or 2, characterized in that the more particularly elongate anode (4) is disposed axially in the centre, and the layer of ion exchange material (6), the treatment space (10), the cathode (9) and the outer space (15) are disposed in shell-form around the anode (4).

4. An apparatus according to one of the preceding claims, characterized in that the anode (5) is disposed more particularly in spiral form on the outside of a perforate or slotted inner tube (1).

5. An apparatus according to one of the preceding claims, characterized in that the layer of ion exchange material (6) is bounded on one or both sides by a grid, fabric or net (5, 7).

6. An apparatus according to one of the preceding claims, characterized in that the treatment space (10) and the outer space (15) are separated by a partition, more particularly a tube (8), on whose inner side the cathode (9) is disposed.

7. An apparatus according to claim 6, characterized in that the partition or tube (8) is perforate or slotted.

8. An apparatus according to one of the preceding claims, characterized in that the inner tube (1), the layer of ion exchange material (6), the partition (8) and/or the tank wall and also the annular intermediate spaces (10, 15) are coaxial with one another.

9. An apparatus according to one of the preceding claims, characterized in that the (longitudinal) axes of the walls, layers and/or tubes are vertical.

10. An apparatus according to one of the preceding claims, characterized in that a water inlet pipe (L1) is provided which discharges into the anode space (3).

11. An apparatus according to one of the preceding claims, characterized in that a water inlet pipe (L2) is provided which discharges into the outer space (15) and/or the treatment space (10).

12. An apparatus according to one of the preceding claims, characterized in that a water removal pipe (L3) is provided which has at least one inlet opening (13) in the lower and upper outer space (15) respectively.

13. An apparatus according to one of the preceding claims, characterized in that the inlet and outlet pipes (L1-L5) of the tank (11) are connected to a multi-way valve (16).

14. An apparatus according to one of the preceding claims, characterized in that it is a double or multiple installation which operates alternately.

15. An apparatus according to one of the preceding claims, characterized in that a magnetic direct or alternating field is supplied via the spiral electrodes.

16. A process for removing cations/anions from liquids, using an apparatus according to one of the preceding claims, characterized in that the supply and discharge pipes (L1-L5) are so operated that the water treatment time is interrupted by periods during which the ion exchange material (6) is regenerated and sludge is removed from the settling space (14).

17. A process according to claim 16, characterized in that periodically during the water treatment time, untreated water flows partially or completely into the outer space (15) and/or into the treatment space (10).

## Revendications

1. Dispositif pour l'élimination de cations / anions dans des liquides avec un récipient (11) contenant le liquide, dans lequel sont disposés un matériau échangeur d'ions (6) ainsi qu'une cathode (9) et une anode (4) auxquelles est appliquée une tension et la couche de matériau échangeur d'ions (6) est disposée entre l'anode (4) et la cathode (6),
caractérisé en ce qu'il existe, entre la couche de matériau échangeur d'ions (6) et la cathode (9), un volume libre rempli de liquide en tant que volume de traitement (10) et, entre la cathode (9) et la paroi du récipient (11), un volume externe (15) rempli de liquide, le volume de traitement (10) et le volume externe (15) étant reliés au moins aux deux extrémités pour autoriser un circuit de liquide.

2. Dispositif selon la revendication 1,
caractérisé en ce que le volume externe (15) et/ou le volume de traitement (10) débouchent en bas dans un volume de sédimentation (14).

3. Dispositif selon la revendication 1 ou 2,
caractérisé en ce que l'anode (4), en particulier oblongue, est disposée centralement axialement et la couche de matériau échangeur d'ions (6), le volume de traitement (10), la cathode (9) et le volume externe (15) sont disposés en forme de cuvette autour de l'anode (4).

4. Dispositif selon l'une des revendications précédentes,
caractérisé en ce que l'anode (4) est disposée, en particulier en forme de spirale, sur la face extérieure d'un tube intérieur (1) muni de trous ou de fentes.

5. Dispositif selon l'une des revendications précédentes,
caractérisé en ce que la couche de matériau échangeur d'ions (6) est limitée sur une face ou les deux par un grillage, un tissu ou un filet (5, 7).

6. Dispositif selon l'une des revendications précédentes,
caractérisé en ce que le volume de traitement (10) et le volume externe (15) sont séparés par une paroi de séparation, en particulier un tube (8), sur la face intérieure de laquelle est disposée la cathode (9).

7. Dispositif selon la revendication 6,
caractérisé en ce que la paroi ou respectivement le tube (8) est muni de trous ou de fentes.

8. Dispositif selon l'une des revendications précédentes,
caractérisé en ce que le tube intérieur (1), la couche de matériau échangeur d'ions (6), la paroi de séparation (8) et/ou la paroi du récipient ainsi qu'également les volumes intermédiaires annulaires (10, 15) sont coaxiaux les uns aux autres.

9. Dispositif selon l'une des revendications précédentes,
caractérisé en ce que les axes (longitudinaux) des parois, des couches et/ou des tubes sont verticaux.

10. Dispositif selon l'une des revendications précédentes,
caractérisé en ce qu'est prévue une conduite d'entrée d'eau (L1) qui débouche dans le volume d'anode (3).

11. Dispositif selon l'une des revendications précédentes,
caractérisé en ce qu'est prévue une conduite d'entrée d'eau (L2) qui débouche dans le volume externe (15) et/ou le volume de traitement (10).

12. Dispositif selon l'une des revendications précédentes,
caractérisé en ce qu'est prévue une conduite de soutirage d'eau (L3) qui présente dans le volume externe inférieur et supérieur (15) au moins chaque fois une ouverture d'entrée (13).

13. Dispositif selon l'une des revendications précédentes,
caractérisé en ce que les conduites d'entrée et de sortie (L1-L5) du récipient (11) sont raccordées à une vanne multivoies (16).

14. Dispositif selon l'une des revendications précédentes,
caractérisé en ce qu'il forme une installation double ou multiple qui travaille en alternances.

15. Dispositif selon l'une des revendications précédentes,
caractérisé en ce qu'un champ magnétique continu ou alternatif est appliqué par les électrodes en forme de spirale.

16. Procédé pour l'élimination de cations / anions de liquides en utilisant un dispositif selon l'une des revendications précédentes,
caractérisé en ce que les conduites d'amenée et d'évacuation (L1-L5) sont commutées de telle manière que le temps de traitement de l'eau est interrompu par des plages de temps pendant lesquelles le matériau échangeur d'ions (6) est regénéré et le volume de décantation (14) est débourbé.

17. Procédé selon la revendication 16,
caractérisé en ce que, pendant le temps de traitement de l'eau, de l'eau brute s'écoule temporairement partiellement ou complètement dans le volume externe (15) et/ou dans le volume de traitement (10).
